# EUROPEAN PATENT APPLICATION

(11) **EP 4 180 395 A1**
(43) Date of publication of application: **17.05.2023**
(21) Application number: 21208645.8
(22) Date of filing: 16.11.2021
(51) Int. Cl.: C01B 33/107

(54) **PROCESS FOR THE PRODUCTION OF SILICON TETRACHLORIDE**

(71) Applicant: PCC SE, 47198 Duisburg (DE)
(72) Inventor: YANKO, Taras, 56-120 Brzeg Dolny (PL); SIDORENKO, Sergiy, 56-120 Brzeg Dolny (PL); STEPANISHEVA, Dina, 56-120 Brzeg Dolny (PL)
(74) Representative: König Szynka Tilmann von Renesse Patentanwälte Partnerschaft mbB Düsseldorf

(57) **Abstract**

The present invention concerns the chemical production of silicon tetrachloride (SiCl₄) and describes a process for the production of silicon tetrachloride comprising the following steps:
- providing a metal chloride salt melt in a chlorination reactor,
- feeding a chlorinating agent to the metal chloride salt melt,
- feeding a silicon source to the metal chloride salt melt,
wherein the temperature of the metal chloride salt melt is kept below its equilibrium melting point while silicon tetrachloride is formed.

The use of a chlorinating apparatus, metal chloride salts and/or chlorinating agents for that process including the use of SiCl₄ obtained is also described.

## Description

### BACKGROUND OF THE INVENTION

The present invention concerns the chemical production of silicon tetrachloride (SiCl4).

It is known to obtain SiCl4 from ferrosilicon (an alloy of iron and silicon) with alkali metal chlorides (e.g. NaCl and KCI) under generation of Fe(III)-chloride. Fe(III)-chloride contaminates the gaseous SiCl4 due to its volatility. Furthermore, it is known that FeCl₃ is needed to catalyse the chlorination of silicon. It is believed to be needed for the removal of SiO₂ from the surface of the silicon particles of the raw material and thereby rendering the silicon accessible for the reaction.

EP2530052A1 describes the chlorination of a silicon source in an alkali metal chloride melt of sodium chloride (NaCI) and potassium chloride (KCI). In the reaction mixture there is a constant molar excess of alkali metal chloride against Fe. It is explained that this reduces the formation of volatile FeCl₃ and hence its contamination of the final product SiCl₄, by transformation of the FeCl₃ into heavier complex salts within the melt. The SiCl₄ obtained has ≤ 2wt.-% Fe-Chloride impurities.

The chlorination process is typically carried out in shaft furnaces, horizontal reactors and fluidized bed devices. A general problem in these processes is the removal of heat from the exothermic reaction. The high temperatures lead to a number of undesired byproducts, also within the SiCl4 gaseous product. Hence, there is a general need of a better process for generating SiCl₄ via chlorination of silicon.

Accordingly, it is an object of the invention to provide an improved process for the generation of SiCl₄.

It is also an object of the invention to provide silicon tetrachloride obtained or obtainable by an improved process for industrial uses and applications, such as e.g. for the production of silicon nano-powders, fumed silica (SiO₂), magnesium disilicide (Mg₂Si), silicon carbides, nitrides and carbonitrides, and/or the use in the production of epitaxial films and semiconductor products or battery electrode material.

### SUMMARY OF THE INVENTION

The problem is solved by the invention described in the independent claims. Dependant claims refer to preferred embodiments of the invention.

The solution of the problem thus is a process for the production of silicon tetrachloride (SiCl₄) comprising the following steps:
- providing a metal chloride salt melt in a chlorination reactor,
- feeding a chlorinating agent, preferably chlorine (Cl₂), to the metal chloride salt melt,
- feeding a silicon source, preferably metallurgic silicon, to the metal chloride salt melt,
wherein the temperature of the metal chloride salt melt is kept below the equilibrium melting point of the metal chloride salt while silicon tetrachloride is formed. Notably, the order of the feeding steps can be exchanged; alternatively, the feeding steps can also be performed in parallel.

The core aspect of the invention is that the inventors have found that, during the reaction, the metal chloride salt(s) can be kept in a molten state even though the temperature is kept below the equilibrium melting point of the salt(s). Without being bound by theory, the inventors believe that the molten state can be maintained in the manner of a supercooled melt.

Advantageously, with keeping the temperature of the melt below the equilibrium melting point of the salt(s), less energy is needed for cooling back the exothermic reaction. In addition, this allows better control over the exothermic behaviour of the reaction and can prevent overheating, also local overheating. A further advantage of using a metal chloride salt melt is that sintering of the silicon source can be prevented.

Furthermore, the invention allows obtaining SiCl4 with high purity (preferably >99%) and/or allows and good overall yield. Preferably, the yield is >90%.

It was found, that the reaction proceeds essentially independently of the reaction temperature. However, in embodiments of the invention, in which cooling is accomplished by feeding the condensed product stream back into the chlorinator, a higher yield over time can be accomplished at lower temperatures.

### DETAILED DESCRIPTION OF THE INVENTION

As pointed out above, the core aspect of the invention is that the temperature of the metal chloride salt melt is kept during the reaction below the equilibrium melting point of the metal chloride salt(s). Preferably, the temperature during the reaction is about 20-80 °C, more preferably about 40-60 °C, most preferably about 45-55 °C or about 50 °C below the metal chloride salt's equilibrium melting point. The equilibrium melting point is the melting point of a substance at equilibrium (with its environment). The melting point of a substance can be measured with a melting point apparatus and/or by differential scanning calorimetry (DSC), preferably by DSC.

In a preferred embodiment the chlorinating agent is chlorine (Cl₂). The most preferred embodiment is gaseous chlorine. The latter can be considered as the most established standard chlorinating agent.

The inventors have found, that preferably the silicon source is used as particles. The particle size can be expressed in terms of dₓ-values, where x represents the percentage of particles with a diameter below this value. The d₅₀-value describes the median particle diameter, i.e. half the particles are bigger and the other half are smaller than this value. Particle sizes and distributions can be determined by static and/or dynamic image analysis, sieve analysis, laser diffraction. Preferably d₅₀ is determined by sieve analysis. In a preferred embodiment of the invention a silicon source is used with d₅₀ up to 2.0 mm, more preferably d₅₀ up to 0.25 mm, even more preferably up to 0.16 mm, most preferably up to 0.10 mm.

The advantage of the above-mentioned sizes of the silicon particles is that, on the one hand, the efficacy of the chlorination reaction is improved. This follows the general principle, "the smaller the better". On the other hand, the particles should not be too small in order to avoid that they will be carried out of the melt and/or out of the reactor together with the gas flow. The unwanted loss of silicon particles is costly and reduces the yield. In a preferred embodiment of the invention the particles the silicon source is used with d₅₀ of at least 0.01 mm, more preferably at least 0.03 mm, most preferably at least 0.05 mm.

In a particularly preferred embodiment of the invention the silicon source is used with d₅₀ between 0.01 mm and 0.25 mm, more preferably, 0.03 and 0.16 mm, most preferably 0.05 mm and 0.10 mm.

Furthermore, larger silicon particles are less reactive and when the melt is drained, can be extracted from the chlorinator as a bottom mass of unused powder. Hence, this also avoids unreacted chlorinating agent in the product gas.

The preferred sizes mentioned above are particularly suitable to provide a compromise between a good contact between the silicon and the chlorinating agent and a reduced risk that an inacceptable amount of particles being carried away.

It is also advantageous when the specific surface area of the particles is kept low. Thus, preferably, the particles have a smooth or even surface. Preferably they are nonporous. The lower the specific surface, the lower is the amount of SiO₂ per particle. This is beneficial, because less FeCl₃ is needed to remove the SiO₂ on the surface in order to allow the chlorination of Si. Hence, with a low specific surface area, it is possible to keep the Fe-content low, both in the melt and in the silicon source.

Spherical particles possess a particularly low specific surface area. Hence it is particularly preferred that spherical particles are used. Such specific surface areas can be accomplished with silicon particles in the above mentioned size ranges. In a preferred embodiment the silicon source comprising spherical particles are used with d₅₀ of at least 0.01 mm, more preferably at least 0.03 mm, most preferably at least 0.05 mm. In a particularly preferred embodiment the silicon source comprising spherical particles are used with d₅₀ between 0.01 mm and 0.25 mm, more preferably, 0.03 and 0.16 mm, most preferably 0.05 mm and 0.10 mm.

In a particularly preferred embodiment, the temperature during the production of SiCl4 is about 20-80 °C below the metal chloride salt's equilibrium melting point and the particle size of the silicon source is up to 0.25 mm, most preferably up to 0.16 mm. This leads to a favourable exothermic behaviour of the reaction, as these reaction conditions are particularly suitable to allow a self-heating process, where the metal chloride salt melt temperature keeps the value of interest.

In a preferred embodiment of the invention, the silicon source is metallurgic grade silicon (MG-Si). This is synonymous with the term "metallurgic silicon". Metallurgic silicon in the context of the invention has a grade of at least 98%, preferably of 99% or higher, most preferably 99.5% or more. Such a silicon source contains only minor amounts of iron. Preferably, the silicon source has an iron content of less than 5 wt.-%, more preferably less than 3 wt.-%, even more preferably less than 2 wt.-% (like in metallurgic Si), especially preferably less than 0.4 wt.-%, most preferably 0.2-0.3wt.-%.

According to the invention the metal chloride salt is at least one salt, comprising a metal cation and (a) chloride anion(s). The metal of the metal chloride salt is preferably an alkali metal and/or an earth alkali metal, preferably an alkali metal, more preferably K or Na, most preferably Na.

In a preferred embodiment the metal chloride salt comprises NaCl and KCI in a molar ratio of NaCl:KCl ≥ 1:1, i.e. an excess of NaCl. It can comprise further alkali metals, such as MgCl₂. The molar ratio of NaCI:KCI while producing SiCl₄ more preferably is >5:1, even more preferably >20:1, most preferably >50:1. In one particular embodiment the melt does not contain KCI. In a most preferred embodiment of the invention the melt contains NaCl as the only chloride salt. The reduction of the content of KCI is advantageous in terms of costs.

These particular embodiments are based on the inventors' observations, that the content of KCI can be reduced, and that the use of KCI can even be completely omitted. In the state of the art, it is thought that KCI is needed to reduce the melting temperature of the chloride salt. However, according to the invention the reaction is conducted also below the equilibrium melting point of the salts, hence, KCI can be reduced or omitted. The equilibrium melting points of the most common metal chloride salts or mixtures in the context of the present invention are known. They are as follows:

| | |
|---|---|
| NaCl/KCl (eutectic, 1:1) | = 657°C |
| NaCl | = 801°C |
| KCI | = 776°C |

Equilibrium binary diagrams of NaCl-KCl are known to the person skilled in the art and show that the eutectic mixture (1:1) of NaCl and KCI has the lowest melting point compared to other ratios.

For an embodiment where the metal chloride salt is NaCl only, the temperature during which SiCl₄ is formed preferably is 750°C ±20°C, i.e. around 51 °C below the melting point of NaCl (which is 801°C).

In a most preferred embodiment with the metal chloride salt being NaCl only, the silicon source is metallurgic silicon, more preferably with d₅₀ of 0.16 mm or less. The temperature during the reaction is preferably 750°C ±20°C.

In an embodiment of the invention a NaCl-rich metal chloride salt melt can be provided by providing a metal chloride salt with a melting point below that of NaCl and adding NaCl. Starting from a more fusible salt and increasing the NaCl content allows for an easier melting of NaCl and does not necessitate heating beyond the equilibrium melting temperature of NaCl. In a preferred embodiment the metal chloride salt melt is provided by melting a metal chloride salt and increasing the NaCl content.

In another embodiment of the invention magnesium chlorides, such as MgCl₂ or its hydrates (MgCl₂(H₂O)ₓ), can be used to lower the melting point of the metal chloride salt (in comparison to NaCI). NaCl and MgCl₂ form a eutectic mixture with a melting point of 459 °C at a NaCl:MgCl₂ molar ratio of 1.32. NaCl and MgCl₂ further form the salts NaMgCl₃ (Tₘ = 466 °C) and Na₂MgCl₄ (Tₘ = 475 °C). In a preferred embodiment the molar ratio of NaCl:MgCl₂ while producing SiCl4 is preferably >5:1, more preferably >20:1, most preferably >50:1.

In yet another preferred embodiment of the invention, first, a metal chloride salt melt of carnallite (KMgCl₃·6H₂O), which is very fusible, is provided and secondly, NaCl is fed which is cheaper and more available - both together to be understood as the step "providing a metal chloride salt melt" according to the invention. In one embodiment, a metal chloride salt melt comprising carnallite is provided and continuously or discontinuously replaced with NaCl. Heating carnallite beyond 120 °C leads to the loss of water of crystallization yielding KMgCl₃, which melts at 487 °C. Alternatively KMgCl₃ can be provided by melting equal parts KCI and a magnesium chloride. In a preferred embodiment the metal chloride salt melt is provided by providing a KMgCl₃ melt and increasing the NaCl content of the metal chloride salt melt.

In a preferred embodiment of the invention NaCl is added to a metal chloride salt melt and the metal chloride is selected from the group consisting of KMgCl₃, (K,Na)MgCl₃, NaMgCl₃, Na₂MgCl₃, (K,Na)₂MgCl₄ or mixtures of NaCl, KCI, and/or MgCl₂ of equivalent stoichiometries. The skilled person knows that melts of mixed metal chlorides, such as NaMgCl₃ or Na₂MgCl₄, can be obtained by mixing NaCl and MgCl₂ in the NaCl:MgCl₂ molar ratios of 1:1 or 2:1 and heating above the mixed metal chloride salt's melting point. For mixed metal chloride salts (K,Na) the Na:K molar ratio is preferably ≥ 1:1, preferably >2:1, more preferably >4:1, most preferably 10:1.

In a particularly preferred embodiment the NaCl:MgCl₂ and NaCl:KCl molar ratios while producing SiCl₄ are preferably >5:1, more preferably >20:1, most preferably >50:1.

The cross-sectional flow speed of the chlorinating agent (through the reactor) is 0.01-0.20 m/s, more preferably 0.01-0.1 m/s, even more preferably 0.01-0.05 m/s, most preferably 0.012-0.025 m/s. These cross-sectional flow speeds are particularly suitable to allow an essentially complete reaction. Preferably, the unreacted chlorinating agent in the SiCl₄ product is substantially reduced. Furthermore, the cross-sectional flow speed favourably supports reducing or even avoiding crystallization and or nucleation of the salts. Hence these cross-sectional flow speeds help that the salt(s) remain(s) molten.

The FeCl₃ formed during the reaction is volatile and can escape into the product stream (gaseous) as an impurity. This is unlike the complexes M[FeCl₄] that are less volatile. For M=K, i.e. potassium chloride in the melt, the equilibrium between FeCl₃ and the less volatile complex (M[FeCl₄]) lies much more on the product side than for Na. Hence, for high proportions of K, a higher amount of iron can be present in the reaction mixture as well as the silicon source. For NaCl as the metal chloride, the reaction mixture should (or can) contain less than 10 wt.-% iron. Thereby the more expensive KCI can be reduced or avoided. The skilled person knows that the elemental composition of reagents and the melt can be measured for example by atomic absorption spectroscopy (AAS), Energy-dispersive X-ray spectroscopy (EDX), and/or inductively coupled plasma mass spectrometry (ICP-MS). The product purity and impurities can be assessed for example by gas chromatography (GC), Fourier-transform infrared spectroscopy (FT-IR), and/or ICP-MS.

The reaction mixture contains preferably less than 10 wt.-% iron. By definition, the reaction mixture comprises the metal chloride salt met, the fed silicon source, and the chlorinating agent (which itself normally does not contain any iron), products and byproducts in the chlorinating reactor. More preferably, in this embodiment the metal chloride salt is NaCl.

In a preferred embodiment of the process, the gaseous reaction products are condensed and at least partially fed back into the chlorination reactor. Advantageously, this cools the reaction due to heat loss of the gas during condensation and secondly, remaining unreacted chlorinating reagent is brought to full reaction by recycling.

In a preferred embodiment, the SiCl₄ formed is extracted afterwards from the gas phase in a condensation system that includes a dust chamber, an irrigation scrubber and an irrigation condenser. Residual gas pulping can optionally be performed in a cooled spray scrubber and spray condenser.

In a preferred embodiment of the invention, the melt is removed continuously and/or intermittently and the chlorination reactor is fed with new metal chloride salt. This is performed slowly and the exothermic reaction can promote the melting of this new metal chloride salt.

### BRIEF DESCRIPTION OF THE FIGURES

**Fig. 1** shows the volume of condensate SiCl4 depending on the chlorination time and the degree of grinding of silicon.
**Fig. 2** shows the production of SiCl4 condensate depending on the time of chlorination and the cross-sectional flow speed of the chlorinating agent chlorine through the melt.

### EXAMPLES

The invention is illustrated by the following examples without being limited to these.

### Example 1: NaCl only

SiCl₄ is produced from metallurgical grade silicon (MG-Si, 99.5%, from PCC BakkiSilicon) and chlorine in a chlorinator, using NaCl as a fluidizing medium or melt. The metallurgic silicon used was analysed with the results shown in Table 1 below.

Particle size was ≤2 mm. The composition was determined in detail via a sieving machine: >0.5mm: 59%, >0.25mm: 14%, >0.16mm: 11.5%, <0.16mm: 15.5%. Before the reaction, the silicon source was grinded to a particle size of 0.16mm or less.

**Table 1: Analysis of metallurgic silicon used, from multiple determinations**

| Mass fraction of the component, wt.-% | | | | | | |
|---|---|---|---|---|---|---|
| Si | Fe | Al | Ca | Ti | P | S |
| 99.57 | 0.25 | 0.08 | 0.030 | 0.045 | 0.0025 | - |
| 99.64 | 0.23 | 0.06 | 0.006 | 0.037 | 0.0022 | - |

The reactor is loaded with NaCl, which is molten using graphite heating electrodes. The heating is turned off and to the melt is added Si (from the top) with a particle size of less than 0.16 mm and bubbled with Cl₂ (from below). The reactor is heated by the exothermic production of SiCl4 and cooled by its evaporation.

Using a feedback loop between a pump (used to feed condensed SiCl4 back into the reactor) and the evaporating product, the average temperature of the melt is kept at 750 °C, i.e. 51 °C below the melting point of NaCl (801°C). At higher temperatures, more SiCl₄ needs to be returned into the reactor for cooling, leading to a lower yield per time. Even though the melt has a temperature about 50 °C below the equilibrium melting temperature (Tₘ), it only starts solidifying at about 700 °C.

For this reaction the reaction mixture should contain less than 10 wt.-% iron. The yield from Si to SiCl₄ was 64%.

### Example 2: Replacement of KCl with NaCl, stepwise

Four experiments were performed. The replacement of valuable KCI in the melt composition with the more common NaCl was tested. The following Table 2 names the relation amount of NaCl and KCI in the waste of the metal chloride melt after reaction. Experiment no. 1 starts with an eutectic melt (NaCI:KCI = 1:1). The melt after performing experiment No. 1 was taken and more NaCl was added to prepare the melt for starting experiment No.2 with a higher amount of NaCl and so on. Hence, experiment no. 4 has the highest ratio of NaCl/KCl.

**Table 2: Composition of metal chloride salt melt after each experiment. Contents are given in wt.-%.**

| Experiment no. | | | NaCl | | KCI | | FeCl₂ | | FeCl₃ | | Si |
|---|---|---|---|---|---|---|---|---|---|---|---|
| | 1 | | 25.7 | | 38.8 | | 18.5 | | 1.2 | | 0.57 |
| | 2 | | 35.1 | | 28.5 | | 7.9 | | 14.4 | | 0.20 |
| | 3 | | 45.0 | | 20.4 | | 10.5 | | 10.9 | | 0.27 |
| | 4 | | 52.7 | | 14.5 | | 11.3 | | 9.4 | | 0.16 |

Consequently, the melting temperature of these four melts must be between the melting temperature of pure NaCl (801°C) and the eutectic NaCl/KCl = 1:1 (657°C). The temperature during the reaction was set to be at least 20 °C below this melting point and maximum 80 °C below this melting point.

In detail:
First, 36 g of metallic iron was chlorinated in an ordinary melt to raise its content in the melt to 8-10%. Then silicon was chlorinated.

For the next experiment, 240 g of the first crystallized melt were taken, 80 g of NaCl was added and chlorinated with an additional load of 9 g of iron, then silicon was added in the usual order. This procedure was repeated for experiments 3 and 4, using the crystallized melts of the previous experiment.

The analyses in Table 2 confirm that the proportion of NaCl in the composition of the melt can be increased, that iron forms the chlorides FeCl₂ and FeCl₃, that their total content of 20 wt.-% will allow the chlorination of silicon with an acceptable rate of waste yield.

### Product analysis

Comparison with results from EP2530052A1:
Table 3 shows comparative results regarding the impurity of the final SiCl₄ product: for the product from EP2530052A1, compared to the four experiments from above.

**Table 3: Analyses of final SiCl₄ products, compared to EP2530052A1**

| Process | Exp. no. | Mass fraction of impurity element, % | | | | | | |
|---|---|---|---|---|---|---|---|---|
| | | Ti | Fe | Al | Ca | P | S | Cl₂ |
| EP 2 530 052 A1 | | 0.0010 | 0.222 | 0.051 | 0.006 | <0.0004 | <0.001 | 0.065 |
| | | 0.0012 | 0.216 | 0.047 | 0.006 | <0.0004 | <0.001 | 0.050 |
| According to the invention | 1 | 0.0075 | 0.0016 | - | - | 0.0002 | 0.0064 | 5.2 |
| | 2 | 0.0018 | 0.0019 | 0.006 | - | 0.0003 | 0.011 | 5.9 |
| | 3 | 0.0002 | 0.0005 | 0.002 | - | <0.0002 | 0.006 | 2.6 |
| | 4 | <0.0001 | <0.001 | - | - | <0.0001 | 0.004 | 0.9 |

### Example 3: Optimization of particle size

The experiment no. 1 from previous Example 2 was repeated in small scale to monitor the effect of the particle size.

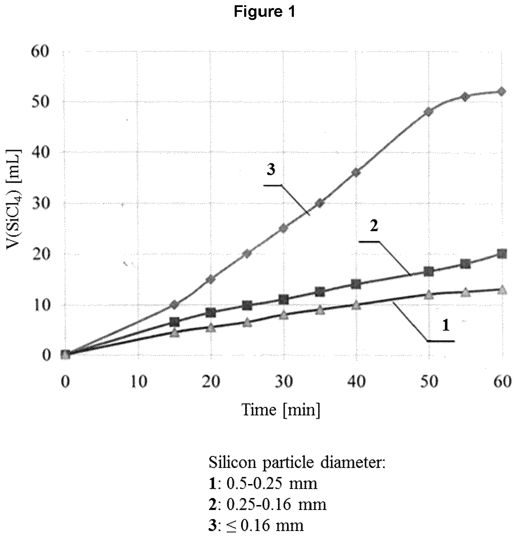

Fig. 1 shows the influence of average particle diameter on the yield of SiCI4. This shows that the preferable average Si particle size should be < 0.16 mm.

### Example 4: Laboratory setup, discontinuous

The design is based on an electric furnace, shaft type, with a power of 1 kW. The dimensions of the shaft allow placing in it an all-brazed quartz chlorinator, up to 100 mm in diameter. The chlorinator is closed from above with a rubber stopper or a graphite cap. A vertical chlorine supply tube is passed through the centre of the plug to the bottom of the chlorinator. In the upper part, a horizontal gas duct with a diameter of 35 mm is removed from the working space. The electric furnace is equipped with an automatic temperature control and regulation system. Before starting, solid salts are loaded into the chlorinator, which, after melting, provide an operating level of the melt with a height of 120 mm.

A tubular heater is freely put on the flue, which allows you to keep a certain temperature in a long flue and discharge the vapour-gas mixture into a water-cooled refrigerator without premature condensation of SiCI4. The diameter of the main flue is deliberately made large in order to collect dust and fumes of high-boiling chlorides in the free space and thereby do without a special condensation chamber. To maintain the desired mode, the temperature on the wall of the gas duct, in the middle part, is controlled by a thermocouple and regulated by an autotransformer, from which electric current is supplied to the heater. Condensation of SiCl4 is carried out in a vertical two-pass refrigerator. The apparatus is made of quartz, has a cooling jacket, one inlet for the steam-gas mixture and two outlets: for transferring exhaust gases to a trap and for draining condensate into a measuring receiver.

By cooling with ice, expanding and changing the direction of movement, SiCl4 is additionally extracted from the exhaust gases, after which they are discharged for neutralization. Chlorine is fed into the chlorinator from a cylinder, having previously been dried with concentrated sulfuric acid. In the chlorination process, the pressure and consumption of chlorine are monitored. Loading of silicon is carried out periodically, shutting off the supply of chlorine. The plug with a chlorine supply is removed from the chlorinator and a calculated sample is poured onto the surface of the melt in the chlorinator through a funnel. The melt is stirred with a chlorine supply tube and chlorination is continued. After the end of the chlorination of a given amount of silicon, the melt is drained. To do this, the chlorinator is disconnected from the condensation system, removed from the electric furnace and, tilting, the liquid melt is poured into a baking sheet for crystallization.

### Example 5: Comparison of the reactors with different diameters and flow rates

Reactors with different diameters were used: 50 and 80 mm. A small reactor was loaded with 350 g of salts, and a large one with 600 g, respectively. At a chlorine flow rate of 40 dm³/h in a reactor with a diameter of 50 mm, the rate of passage of chlorine, taking into account thermal expansion, was 0.023 m/s, and in a reactor of Ø 80 mm, 0.009 m/s. The flow for the operation of the reactor turned out to be critically small, therefore, the chlorine consumption was increased to 60 dm³/h, which corresponds to the rate of gas passage through the chlorinator section 0.014 m/s.

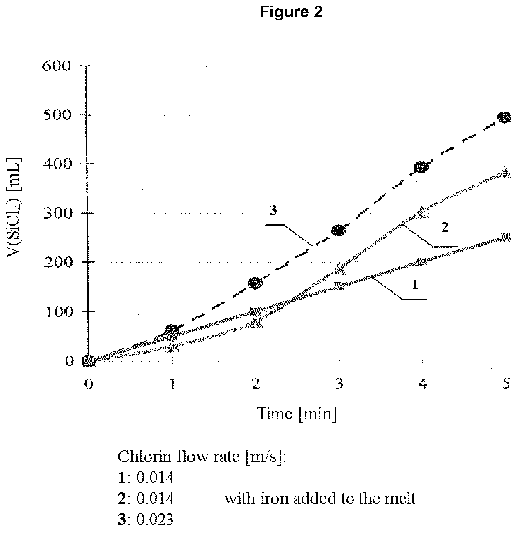

Fig. 2 shows the results of experiments on the production of SiCl4 condensate. The maintenance of the continuous chlorination process is carried out by rhythmic loading after a half-hour interval of silicon 20 g, crushed to a particle size of ≤ 0.16 mm.

## Claims

1. A Process for the production of silicon tetrachloride (SiCl₄) comprising the following steps:
- providing a metal chloride salt melt in a chlorination reactor,
- feeding a chlorinating agent, preferably chlorine (Cl₂), to the metal chloride salt melt,
- feeding a silicon source to the metal chloride salt melt,
wherein the temperature of the metal chloride salt melt is kept below the equilibrium melting point of the metal chloride salt, while silicon tetrachloride is formed.

2. Process according to claim 1, wherein the difference between the temperature of the metal chloride salt melt and the equilibrium melting point is 20-80 °C, preferably 40-60 °C, more preferably 45-55 °C or about 50 °C.

3. Process according to any of claims 1 or 2, wherein the metal chloride comprises NaCl and/or KCI in a molar ratio NaCl:KCl ≥ 1:1, more preferably is >5:1, even more preferably >20:1, most preferably >50:1.

4. Process according to any of claims 1 to 3, wherein the cross-sectional flow speed of the chlorinating agent is 0.01 - 0.20 m/s.

5. Process according to any of the claims 1 to 4, wherein the melt is removed continuously and/or intermittently and fed with new metal chloride salt.

6. Process according to any of claims 1 to 5, wherein the silicon source has an iron content of at most 8 wt.-%, preferably at most 5 wt.-%, more preferably at most 2 wt.-%, even more preferably at most 0.5 wt.-%, most preferably at most 0.3 wt.-%.

7. Process according to any of claims 1 to 6, wherein the reaction mixture contains less than 10 wt.-% iron.

8. Process according to any of the claims 1 to 7, wherein the silicon source silicon source is used with d₅₀ up to 2.0 mm, preferably d₅₀ up to 0.25 mm, more preferably up to 0.16 mm, most preferably up to 0.10 mm.

9. Process according to any of the claims 1 to 7, wherein the silicon source silicon source is used with d₅₀ of at least 0.01 mm, more preferably at least 0.03 mm, most preferably at least 0.05 mm.

10. Process according to any of claims 1 to 9, wherein the gaseous reaction products are condensed and at least partially fed back into the chlorination reactor.

11. Process according to any of claims 1 to 10, wherein the metal chloride salt melt is provided by melting a metal chloride salt and increasing the NaCl content of the melt.

12. Process according to claim 11, wherein NaCl is added to a metal chloride salt melt and the metal chloride is selected from the group consisting of KMgCl₃, (K,Na)MgCl₃, NaMgCl₃, Na₂MgCl₃, (K,Na)₂MgCl₄ or mixtures of NaCl, KCI, and/or MgCl₂ of equivalent stoichiometries.

13. The use of silicon tetrachloride obtained by the process according to any of the claims 1 to 12 for
- the production of silicon nano-powders,
- the application as battery electrode material,
- the production of fumed silica (SiO₂),
- the production of magnesium disilicide (Mg₂Si),
- the production of silicon carbides, nitrides and carbonitrides, and/or
- the use in the production of epitaxial films and semiconductor products.

14. The use of a chlorinating apparatus and/or a metal chloride salt and/or a chlorinating agent for performing the process according to any of the claims 1 to 12.
